# FASCICULE DE BREVET EUROPEEN

(11) **EP 1 446 212 B1**
(45) Date de publication et mention de la délivrance du brevet: **28.03.2007**
(21) Numéro de dépôt: 02791897.8
(22) Date de dépôt: 25.10.2002
(51) Int. Cl.: B01D 21/00

(54) **DECANTEUR LAMELLAIRE**
LAMELLENABSCHEIDER
LAMELLAR CLARIFIER

(30) Priorité: 26.10.2001 FR 0113889
(43) Date de publication de la demande: 18.08.2004
(73) Titulaire: Innova Environnement, 44150 Ancenis (FR)
(72) Inventeur: BOULANT, Alain, F-44380 Pornichet (FR)
(74) Mandataire: Gaillarde, Frédéric F. Ch.
(86) Numéro de dépôt international: PCT/FR2002/003679
(87) Numéro de publication internationale: WO 2003/035211

(56) Documents cités:
- FR-A- 2 688 416
- FR-A- 2 754 733

## Description

La présente invention se rapporte à un décanteur lamellaire.

On connaît du document FR 2 754 733 un décanteur lamellaire du type comprenant :
- a) un réservoir de liquide à décanter,
- b) des moyens pour conduire ledit liquide dans une zone inférieure dudit réservoir,
- c) des moyens pour évacuer ledit liquide d'une zone supérieure dudit réservoir,
- d) une pluralité de plaques de décantation montées à l'intérieur dudit réservoir, ces plaques étant parallèles et régulièrement espacées entre elles de manière à définir une pluralité de passages s'étendant entre lesdites zones inférieure et supérieure, et
- e) des moyens pour calibrer le flux dudit liquide entre lesdits passages et ladite zone supérieure, lesdits moyens de calibrage comprenant :
   - e1) des premiers organes tubulaires montés à l'intérieur dudit réservoir, parallèles auxdites plaques et ménagés chacun à l'extrémité supérieure d'une desdites plaques,
   - e2) des deuxièmes organes tubulaires disposés sensiblement en quinconce par rapport auxdits premiers organes tubulaires, et
   - e3) des moyens pour faire varier la distance desdits deuxièmes organes tubulaires par rapport auxdits premiers organes tubulaires.

Bien qu'il permette de traiter de manière relativement efficace la plupart des liquides chargés de matières en suspension, un tel décanteur présente certains inconvénients.

On notera notamment que les montages et les démontages des plaques de décantation d'une part et des premiers organes tubulaires d'autre part doivent s'effectuer de manière séparée, ce qui demande beaucoup de temps et grève ainsi tant les coûts de fabrication que ceux de maintenance.

La présente invention a pour but de fournir un décanteur permettant de réduire ces inconvénients.

On atteint ce but de l'invention avec un décanteur lamellaire du type comprenant :
- a) un réservoir de liquide à décanter,
- b) des moyens pour conduire ledit liquide dans une zone inférieure dudit réservoir,
- c) des moyens pour évacuer ledit liquide d'une zone supérieure dudit réservoir,
- d) une pluralité de plaques de décantation montées à l'intérieur dudit réservoir, ces plaques étant parallèles et régulièrement espacées entre elles de manière à définir une pluralité de passages s'étendant entre lesdites zones inférieure et supérieure, et
- e) des moyens pour calibrer le flux dudit liquide entre lesdits passages et ladite zone supérieure, lesdits moyens de calibrage comprenant :
   - e1) des premiers organes tubulaires montés à l'intérieur dudit réservoir, parallèles auxdites plaques et ménagés chacun à l'extrémité supérieure d'une desdites plaques,
   - e2) des deuxièmes organes tubulaires disposés sensiblement en quinconce par rapport auxdits premiers organes tubulaires, et
   - e3) des moyens pour faire varier la distance desdits deuxièmes organes tubulaires par rapport auxdits premiers organes tubulaires,
   remarquable en ce que lesdites plaques de décantation sont montées solidaires desdits premiers organes tubulaires.

Grâce à ces caractéristiques, chaque plaque de décantation et son premier organe tubulaire associé forment un ensemble monobloc pouvant être monté et démonté rapidement, ce qui permet de réduire considérablement les coûts de fabrication et de maintenance par rapport à la technique antérieure.

D'autres caractéristiques du décanteur selon l'invention sont définies dans les revendications ci-annexées.

La présente invention se rapporte également à un procédé de nettoyage d'un décanteur conforme à ce qui précède, défini dans les revendications ci-annexées.

D'autres caractéristiques et avantages du décanteur selon l'invention apparaîtront à la lecture de la description qui va suivre et à l'examen du dessin annexé, dans lequel :
- la figure 1 est une vue en perspective d'un premier mode de réalisation du décanteur selon l'invention,
- la figure 2 est une vue partielle en coupe selon le plan P de la figure 1 du décanteur de cette figure lorsqu'il se trouve en configuration de fonctionnement,
- la figure 3 est analogue à la figure 2, le décanteur se trouvant dans une configuration de nettoyage, et
- les figures 4 et 5 sont analogues respectivement aux figures 2 et 3, pour un deuxième mode de réalisation du décanteur selon l'invention.

Sur ces figures, des références identiques désignent des organes ou ensembles d'organes identiques ou analogues.

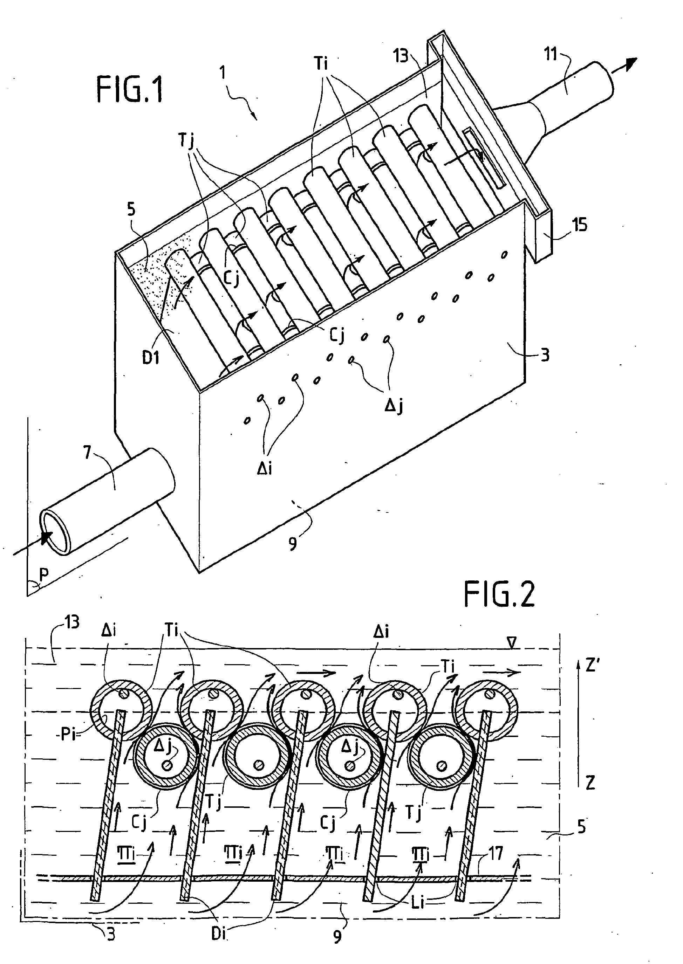

On se reporte à présent à la figure 1, sur laquelle on voit que, selon un premier mode de réalisation, le décanteur 1 selon l'invention comprend un réservoir 3 de liquide à décanter 5, présentant d'une part une conduite d'arrivée de liquide 7 débouchant dans une zone inférieure 9 du réservoir 3, et d'autre part une conduite d'évacuation de liquide 11 communiquant avec une zone supérieure 13 du réservoir 3 par exemple par l'intermédiaire d'une gouttière 15 de récupération du liquide 5.

A l'intérieur du réservoir 3 se trouvent une pluralité de plaques de décantation Di, dont seule la première, D1, est visible sur la figure 1.

Des premiers organes tubulaires Ti sont solidaires de ces plaques, et des deuxièmes organes tubulaires Tj flottant dans le liquide 5 sous les premiers organes tubulaires s'appuient sensiblement en quinconce contre ces derniers.

On se reporte à présent à la figure 2 pour de plus amples détails sur l'agencement des plaques Di et des premiers Ti et deuxièmes Tj organes tubulaires à l'intérieur du réservoir 3.

Comme cela apparaît sur cette figure, les plaques Di sont sensiblement parallèles et régulièrement espacées entre elles de manière à définir une pluralité de passages Πi s'étendant entre les zones inférieure 9 et supérieure 13 du réservoir 3.

Les premiers organes tubulaires Ti sont reliés aux parois du réservoir 3 de préférence de manière pendulaire, c'est-à-dire que les parois intérieures Pi de chacun des organes Ti reposent sur des doigts Δi solidaires des parois du réservoir 3.

Chaque organe tubulaire Ti est fendu sur sa longueur de manière à recevoir une plaque Di, des moyens de fixation traditionnels (non représentés) tels que des goupilles permettant de solidariser entre eux ces organes tubulaires et ces plaques.

Les deuxièmes organes tubulaires Tj sont également reliés aux parois du réservoir 3 de préférence de manière pendulaire au moyen de doigts Δj, ces doigts étant placés par rapport aux doigts Δi de manière que les deuxièmes organes tubulaires Tj se trouvent sous les premiers organes tubulaires Ti, et qu'ils s'appuient sensiblement en quinconce contre ces derniers.

Des moyens de cale Cj sont de préférence interposés entre les premiers organes tubulaires Ti et les deuxièmes organes tubulaires Tj.

De préférence, comme cela est représenté sur les figures 1 à 3, ces moyens de cale comprennent des paires de bagues enfilées sur les deuxièmes organes tubulaires Tj, à proximité de chacune des extrémités de ces organes.

Ces bagues sont choisies de manière à maintenir un écart prédéterminé et identique entre chacun des premiers organes tubulaires Ti et les deuxièmes organes tubulaires Tj associés.

Ces bagues sont de préférence toriques et formées dans un matériau élastomère tel que le caoutchouc.

Les plaques Di peuvent par exemple être formées en tôle, et les organes tubulaires Ti, Tj peuvent par exemple être formés en matière plastique.

De préférence, les organes tubulaires Ti, Tj sont borgnes à leurs extrémités, c'est-à-dire que deux cloisons ferment la cavité définie par chacun de ces organes au voisinage de ses deux extrémités.

On notera également que l'on prévoit de préférence, comme cela est visible sur la figure 2, au moins une barre 17, et deux préférences deux barres parallèles entre elles, s'étendant dans la zone inférieure 9 du réservoir 3.

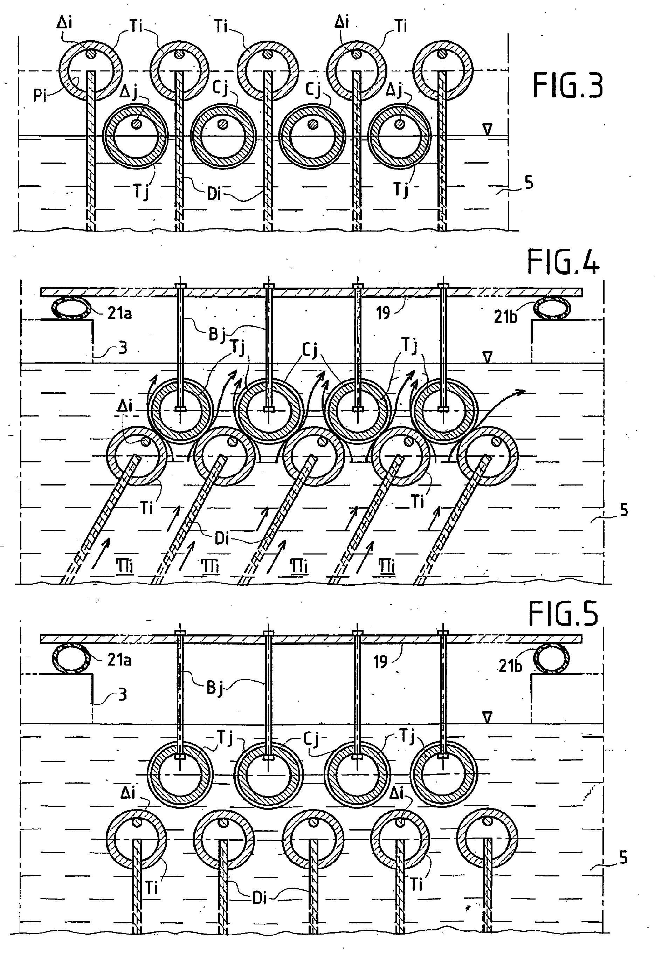

Ces barres 17sont reliées à chaque plaque Di par une liaison Li de type pivot glissant, de manière qu'un déplacement purement horizontal (c'est-à-dire parallèlement et à distance constante du fond du réservoir 3) de ces barres entraîne une variation d'inclinaison des plaques Di, par exemple pour passer d'une position dite « de fonctionnement » représentée à la figure 2, dans laquelle les plaques Di sont inclinées par rapport à la verticale ZZ', à une position dite « de nettoyage » représentée à la figure 3, dans laquelle les plaques Di sont sensiblement parallèles à cette verticale.

On se reporte à présent aux figures 4 et 5, sur lesquelles on a représenté de manière partielle un deuxième mode de réalisation du décanteur selon l'invention.

Comme cela apparaît sur ces figures, ce mode de réalisation diffère du précédent en ceci que les deuxièmes organes tubulaires Tj ne sont plus suspendus de manière pendulaire aux parois du réservoir 3 sous les premiers organes tubulaires Ti, mais sont suspendus au-dessus de ces premiers organes tubulaires de manière rigide au moyen d'une pluralité de bras Bj reliés à une rampe 19 s'étendant au-dessus de ces premiers organes tubulaires.

La rampe 19 est mobile entre une position dite « de fonctionnement » représentée à la figure 4, dans laquelle les deuxièmes organes tubulaires Tj s'appuient sensiblement en quinconce contre les premiers organes tubulaires Ti, et une position dite « de nettoyage » représentée à la figure 5, dans laquelle les deuxièmes organes tubulaires Tj sont écartés des premiers organes tubulaires Ti.

De manière préférée, et comme cela est représenté sur les figures 4 et 5, ce sont des membranes gonflables 21 a, 21 b interposées entre la rampe 19 et les bords du réservoir 3 qui permettent d'abaisser ou de soulever cette rampe de manière à la placer respectivement dans ses positions de fonctionnement ou de nettoyage.

On va a présent décrire le fonctionnement et les avantages du décanteur selon l'invention.

Le trajet du liquide à décanter lorsque le décanteur est en fonctionnement est indiqué sur les figures 1, 2 et 4 par des flèches.

Comme cela est visible sur la figure 1, le liquide à décanter 5 commence par entrer par la conduite d'arrivée de liquide 7 de manière à rejoindre la zone inférieure 9 du réservoir 3.

Ensuite comme cela est visible sur les figures 2 et 4, le liquide à décanter 5 monte dans les passages IIi, puis se faufile entre les premiers organes tubulaires Ti et les deuxièmes organes tubulaires Tj, grâce aux écarts maintenus par les bagues Cj.

Le liquide à décanter 5 arrive de la sorte dans la zone supérieure 13 du réservoir 3, puis est évacué de ce réservoir par la gouttière 15 et par la conduite 11.

Lors de la circulation ascendante du liquide 5 le long des plaques Di, les matières en suspension dans ce liquide se déposent sur les plaques Di, puis glissent en majorité vers le fond du réservoir 3.

Une fraction de ces matières demeure toutefois collée sur les plaques Di, formant un dépôt ou « boue », de sorte qu'il est nécessaire d'arrêter périodiquement les opérations de décantation et de procéder à un nettoyage des plaques Di.

Pour ce faire, on peut commencer par actionner les barres 17 (voir figure 2) de manière à amener les plaques Di en position verticale, comme cela est représenté sur les figures 3 et 5.

Une fois que les plaques Di se trouvent en position sensiblement verticale, une partie de la boue collée sur ces plaques tombe sous l'effet de son propre poids au fond du réservoir 3.

Dans le premier mode de réalisation (voir figure 3), on peut alors faire baisser le niveau du liquide 5 de manière que les deuxièmes organes tubulaires Tj, qui flottent dans ce liquide, s'éloignent des premiers organes tubulaires Ti en direction du fond du réservoir 3, la course étant toutefois limitée par les doigts Δj.

Dans le deuxième mode de réalisation (voir figure 5), on peut gonfler les membranes 21 a, 21 b de manière à soulever la rampe 19, et par là même à éloigner les deuxièmes organes tubulaires Tj des premiers organes tubulaires Ti en direction du haut du réservoir 3.

Ce faisant, on libère l'accès aux plaques Di à partir du haut du réservoir 3, ce qui permet d'introduire par exemple un jet d'eau pour faire partir le reliquat de boue collée sur ces plaques.

On remarquera que les étapes consistant à faire baisser le niveau du liquide 5 (premier mode de réalisation) ou à soulever les deuxièmes organes tubulaires Tj (deuxième mode de réalisation) est facultative, étant entendu que si la boue collée sur les plaques Di est peu récalcitrante, il peut être suffisant d'amener ces plaques en position verticale pour obtenir le nettoyage recherché.

Inversement, on peut aussi faire baisser le niveau du liquide 5 (premier mode de réalisation) ou soulever les deuxièmes organes tubulaires Tj (deuxième mode de réalisation) sans avoir modifié préalablement l'inclinaison des plaques Di, pour nettoyer directement ces plaques avec un jet d'eau.

Il peut également se trouver que des matériaux encombrants, appelés « flottants » viennent se coincer dans les passages Πi pendant le fonctionnement du décanteur selon l'invention.

Pour extraire ces flottants du décanteur, il n'est pas nécessaire de stopper le fonctionnement de ce dernier.

Dans le premier mode de réalisation en effet, il suffit d'exercer une pression vers le bas sur celui des deuxièmes organes tubulaires Tj qui est concerné pour retirer le flottant coincé. On notera que la course vers le bas de cet organe tubulaire est permise par son articulation pendulaire sur les parois du réservoir 3.

Dans le deuxième mode de réalisation, il suffit de gonfler les membranes 21a, 21b de manière à soulever les deuxièmes organes tubulaires Tj, de retirer le flottant coincé, puis de dégonfler aussitôt ces membranes.

Comme on peut le comprendre à présent, le calibrage du flux de liquide à décanter à la sortie des passages Πi définis par les plaques de décantation Di peut être obtenu par un simple rapprochement des deuxièmes organes tubulaires Tj par rapport aux premiers organes tubulaires Ti, les cales Cj maintenant les écarts nécessaires au passage du liquide 5.

Les deuxièmes organes tubulaires Tj étant structurellement distincts des premiers organes tubulaires Ti, on peut mouvoir ces premiers et deuxièmes organes indépendamment les uns des autres en vue du nettoyage du décanteur, ce qui permet de s'affranchir des moyens d'actionnement lourds et coûteux du décanteur de la technique antérieure.

Selon le type de nettoyage souhaité, on peut modifier l'inclinaison des plaques Di (et donc faire pivoter les premiers organes tubulaires Ti) et/ou déplacer verticalement les deuxièmes organes tubulaires Tj.

Grâce au fait que chaque plaque de décantation Di et son premier organe tubulaire associé Ti forment un ensemble monobloc pouvant être monté et démonté rapidement, on peut réduire considérablement les coûts de fabrication et de maintenance par rapport à la technique antérieure.

On notera que, dans les deux modes de réalisation qui ont été décrits, l'articulation du type pendulaire des premiers organes tubulaires Ti sur les parois du réservoir 3 permet de diminuer les frottements apparaissant lors du pivotement des plaques Di, et ainsi d'alléger au maximum la structure permettant d'actionner ces plaques, à savoir les barres 17.

Cette diminution des frottements rend également possible l'utilisation de simples liaisons Li du type à pivot glissant, grâce auxquelles les barres 17 peuvent se déplacer à distance constante du fond du réservoir 3.

On notera encore que, selon que l'on souhaite que le flux de liquide 5 entre les passages Πi et la zone supérieure 13 soit plus ou moins important, on peut choisir des bagues Cj plus ou moins épaisses.

On notera également que, dans le premier mode de réalisation, les doigts Δj permettent d'éviter que les deuxièmes organes tubulaires Tj ne tombent au fond du réservoir 3 (dans la boue) lorsqu'on vide celui-ci.

Bien entendu, la présente invention n'est pas limitée aux modes de réalisation décrits et représentés, fournis à titre d'exemples illustratifs et non limitatifs.

C'est ainsi par exemple que l'on pourrait envisager que les premiers organes tubulaires Ti soient montés de manière fixe à l'intérieur du réservoir 3, auquel cas les plaques de décantation Di seraient elles aussi fixes.

C'est ainsi également que l'on pourrait envisager une variante du premier mode de réalisation, dans laquelle le décanteur lamellaire comprendrait des moyens d'actionnement tels que des tiges susceptibles de venir au contact des deuxièmes organes tubulaires et de pousser ces derniers vers le fond du réservoir lorsqu'on souhaite nettoyer les plaques de décantation.

Dans cette variante, il ne serait plus nécessaire de faire baisser le niveau du liquide dans le réservoir pour déplacer les deuxièmes organes tubulaires vers le fond du réservoir.

C'est ainsi encore que l'on pourrait envisager une variante du deuxième mode de réalisation dans laquelle les deuxièmes organes tubulaires seraient positionnés sous les premiers organes tubulaires, et reliés à une rampe placée au-dessus de ces premiers organes tubulaires, de sorte que pour éloigner les deuxièmes organes tubulaires des premiers organes tubulaires, il faudrait abaisser la rampe.

C'est ainsi également que l'on pourrait envisager que les premiers et deuxièmes organes tubulaires présentent des sections non circulaires.

## Revendications

1. Décanteur lamellaire (1) du type comprenant :
- a) un réservoir (3) de liquide à décanter (5),
- b) des moyens (7) pour conduire ledit liquide (5) dans une zone inférieure (9) dudit réservoir (3),
- c) des moyens (11) pour évacuer ledit liquide (5) d'une zone supérieure (13) dudit réservoir (3),
- d) une pluralité de plaques de décantation (Di) montées à l'intérieur dudit réservoir (3), ces plaques (Di) étant parallèles et régulièrement espacées entre elles de manière à définir une pluralité de passages (Πi) s'étendant entre lesdites zones inférieure (9) et supérieure (13), et
- e) des moyens pour calibrer le flux dudit liquide (5) entre lesdits passages (Πi) et ladite zone supérieure (13), lesdits moyens de calibrage comprenant :
- e1) des premiers organes tubulaires (Ti) montés à l'intérieur dudit réservoir (3), parallèles auxdites plaques et ménagés chacun à l'extrémité supérieure d'une desdites plaques,
- e2) des deuxièmes organes tubulaires (Tj) disposés sensiblement en quinconce par rapport auxdits premiers organes tubulaires (Ti), et
- e3) des moyens pour faire varier la distance desdits deuxièmes organes tubulaires (Tj) par rapport auxdits premiers organes tubulaires (Ti),
**caractérisé en ce que** lesdites plaques de décantation (Di) sont montées solidaires desdits premiers organes tubulaires (Ti).

2. Décanteur (1) selon la revendication 1, **caractérisé en ce que** lesdits premiers organes tubulaires (Ti), et donc lesdites plaques de décantation (Di), sont montés mobiles dans ledit réservoir.

3. Décanteur (1) selon la revendication 2, **caractérisé en ce que** lesdits premiers organes tubulaires (Ti) sont montés de manière pendulaire dans réservoir.

4. Décanteur (1) selon l'une des revendications 2 ou 3, **caractérisé en ce qu'**il comprend des moyens (Δi, 17) pour faire varier de concert l'inclinaison desdites plaques de décantation (Di).

5. Décanteur (1) selon la revendication 4, **caractérisé en ce que** lesdits moyens de variation d'inclinaison comprennent une barre d'actionnement (17) reliée par une liaison du type pivot glissant auxdites plaques de décantation (Di).

6. Décanteur (1) selon la revendication 1, **caractérisé en ce que** lesdits premiers organes tubulaires (Ti) sont montés fixes dans ledit réservoir.

7. Décanteur (1) selon l'une quelconque des revendications précédentes, **caractérisé en ce qu'**il comprend des moyens de cale (Cj) adaptés pour maintenir un écart prédéterminé entre lesdits premiers (Ti) et deuxièmes (Tj) organes tubulaires.

8. Décanteur (1) selon la revendication 7, **caractérisé en ce que** lesdits moyens de cale (Cj) comprennent des bagues enfilées sur lesdits premiers (Ti) ou deuxièmes (Tj) organes tubulaires.

9. Décanteur (1) selon la revendication 8, **caractérisé en ce que** deux bagues (Cj) sont enfilées sur chacun desdits deuxièmes organes tubulaires (Tj).

10. Décanteur (1) selon l'une des revendications 8 ou 9, **caractérisé en ce que** lesdites bagues (Cj) sont formées dans un matériau élastomère.

11. Décanteur (1) selon l'une quelconque des revendications 8 à 10, **caractérisé en ce que** lesdites bagues (Cj) sont toriques.

12. Décanteur (1) selon l'une quelconque des revendications précédentes, **caractérisé en ce que** lesdits deuxièmes organes tubulaires (Tj) sont adaptés pour flotter dans ledit liquide (5) sous lesdits premiers organes tubulaires (Ti).

13. Décanteur selon la revendication 12, **caractérisé en ce qu'**il comprend des moyens d'actionnement pour pousser lesdits deuxièmes organes tubulaires (Tj) vers le fond dudit réservoir.

14. Décanteur (1) selon l'une des revendications 12 ou 13, **caractérisé en ce que** lesdits deuxièmes organes tubulaires (Tj) sont articulés de manière pendulaire par rapport audit réservoir (3).

15. Décanteur (1) selon l'une quelconque des revendications 1 à 11, **caractérisé en ce que** lesdits deuxièmes organes tubulaires (Tj) sont fixés sur des moyens de rampe (19) s'étendant au-dessus desdits premiers organes tubulaires (Ti), lesdits moyens de rampe (19) étant mobiles entre une position de fonctionnement dans laquelle lesdits deuxièmes organes tubulaires (Tj) s'appuient contre lesdits premiers organes tubulaires (Ti), et une position de nettoyage dans laquelle lesdits deuxièmes organes tubulaires (Tj) sont écartés desdits premiers organes tubulaires (Ti).

16. Décanteur (1) selon la revendication 15, **caractérisé en ce que** lesdits deuxièmes organes tubulaires (Tj) sont placés au-dessus desdits premiers organes tubulaires (Ti).

17. Décanteur selon la revendication 15, **caractérisé en ce que** lesdits deuxièmes organes tubulaires sont placés au-dessous desdits premiers organes tubulaires.

18. Décanteur (1) selon l'une quelconque des revendications 15 à 17, **caractérisé en ce qu'**il comprend des moyens de membrane gonflable (21a, 21 b) pour faire passer ladite rampe (19) de ladite position de fonctionnement à ladite position de nettoyage.

19. Procédé de nettoyage d'un décanteur (1) conforme à la revendication 12, **caractérisé en ce qu'**il comprend l'étape consistant à faire baisser le niveau dudit liquide (5) dans ledit réservoir (3) de manière à éloigner lesdits deuxièmes organes tubulaires (Tj) desdits premiers organes tubulaires (Ti) en direction du fond dudit réservoir (3), afin de rendre lesdites plaques de décantation (Di) accessibles depuis le haut dudit réservoir (3).

20. Procédé de nettoyage d'un décanteur conforme à la revendication 11, **caractérisé en ce qu'**il comprend l'étape consistant à pousser lesdits deuxièmes organes tubulaires vers le fond dudit réservoir avec lesdits moyens d'actionnement, afin de rendre lesdites plaques de décantation accessibles depuis le haut dudit réservoir.

21. Procédé de nettoyage d'un décanteur (1) conforme à la revendication 16, **caractérisé en ce qu'**il comprend l'étape consistant à soulever ladite rampe (19) de manière à éloigner lesdits deuxièmes organes tubulaires (Tj) desdits premiers organes tubulaires (Ti) en direction du haut dudit réservoir (3), afin de rendre lesdites plaques de décantation (Di) accessibles depuis le haut dudit réservoir (3).

22. Procédé de nettoyage d'un décanteur conforme à la revendication 17, **caractérisé en ce qu'**il comprend l'étape consistant à abaisser ladite rampe de manière à éloigner lesdits deuxièmes organes tubulaires desdits premiers organes tubulaires en direction du bas dudit réservoir, afin de rendre lesdites plaques de décantation accessibles depuis le haut dudit-réservoir.

23. Procédé selon l'une quelconque des revendications 19 à 22 pour nettoyer un décanteur (1) conforme à la revendication 4, **caractérisé en ce qu'**il comprend en outre l'étape consistant à placer lesdites plaques de décantation (Di) dans une position sensiblement parallèle à la verticale.

## Claims

1. Lamellar clarifier (1) of the type comprising:
- a) a tank (3) for liquid (5) to be clarified,
- b) means (7) for conducting said liquid (5) into a lower region (9) of said tank (3),
- c) means (11) for evacuating said liquid (5) from an upper region (13) of said tank (3),
- d) a plurality of clarifier plates (Di) mounted inside said tank (3), said plates (Di) being parallel and regularly spaced to define a plurality of passages (Πi) between said lower region (9) and said upper region (13), and
- e) means for calibrating the flow of said liquid (5) between said passages (Πi) and said upper region (13), said calibration means comprising:
- e1) first tubular members (Ti) mounted inside said tank (3), parallel to said plates, each member being arranged at the upper extreme end of one of said plates
- e2) second tubular members (Tj) disposed substantially in a quincunx arrangement relative to said first tubular members (Ti), and
- e3) means for varying the distance between said second tubular members (Tj) and said first tubular members (Ti),
which clarifier is **characterized in that** said clarifier plates (Di) are fastened to said first tubular members (Ti).

2. Clarifier (1) according to claim 1, **characterized in that** said first tubular members (Ti), and therefore said clarifier plates (Di), are mobile in said tank.

3. Clarifier (1) according to claim 2, **characterized in that** said first tubular members (Ti) are mounted in said tank in a pendular manner.

4. Clarifier (1) according to either claim 2 or claim 3, **characterized in that** it comprises means (Δi, 17) that together vary the inclination of said clarifier plates (Di).

5. Clarifier (1) according to claim 4, **characterized in that** said inclination variation means comprise an actuation bar (17) connected by a sliding pivot type link to said clarifier plates (Di).

6. Clarifier (1) according to claim 1, **characterized in that** said first tubular members (Ti) are fixed in said tank.

7. Clarifier (1) according to any preceding claim, **characterized in that** it comprises spacer means (Cj) adapted to maintain a predetermined space between said first tubular members (Ti) and said second tubular members (Tj).

8. Clarifier (1) according to claim 7, **characterized in that** said spacer means (Cj) comprise rings threaded onto said first tubular members (Ti) or said second tubular members (Tj).

9. Clarifier (1) according to claim 8, **characterized in that** two rings (Cj) are threaded onto each of said second tubular members (Tj).

10. Clarifier (1) according to either claim 8 or claim 9, **characterized in that** said rings (Cj) are made from an elastomer material.

11. Clarifier (1) according to any of claims 8 to 10, **characterized in that** said rings (Cj) are O-rings.

12. Clarifier (1) according to any preceding claim, **characterized in that** said second tubular members (Tj) are adapted to float in said liquid (5) below said first tubular members (Ti).

13. Clarifier according to claim 12, **characterized in that** it comprises actuation means for pushing said second tubular members (Tj) toward the bottom of said tank.

14. Clarifier (1) according to either claim 12 or claim 13, **characterized in that** said second tubular members (Tj) are articulated to said tank (3) in a pendular manner.

15. Clarifier (1) according to any of claims 1 to 11, **characterized in that** said second tubular members (Tj) are fixed to manifold means (19) above said first tubular members (Ti), said manifold means (19) being mobile between an operating position in which said second tubular members (Tj) bear against said first tubular members (Ti) and a cleaning position in which said second tubular members (Tj) are moved away from said first tubular members (Ti).

16. Clarifier (1) according to claim 15, **characterized in that** said second tubular members (Tj) are disposed above said first tubular members (Ti).

17. Clarifier according to claim 15, **characterized in that** said second tubular members are disposed below said first tubular members.

18. Clarifier (1) according to any of claims 15 to 17, **characterized in that** it comprises inflatable membrane means (21 a, 21 b) for moving said manifold (19) from said operating position to said cleaning position.

19. A method of cleaning a clarifier (1) according to claim 12, **characterized in that** it comprises a step of lowering the level of said liquid (5) in said tank (3) to move said second tubular members (Tj) away from said first tubular members (Ti) in the direction of the bottom of said tank (3) to render said clarifier plates (Di) accessible from the top of said tank (3).

20. Method of cleaning a clarifier according to claim 11, **characterized in that** it comprises the step of pushing said second tubular members toward the bottom of said tank with said actuation means in order to render said clarifier plates accessible from the top of said tank.

21. Method of cleaning a clarifier (1) according to claim 16, **characterized in that** it comprises the step of raising said manifold (19) to move said second tubular members (Tj) away from said first tubular members (Ti) in the direction of the top of said tank (3) in order to render said clarifier plates (Di) accessible from the top of said tank (3).

22. Method of cleaning a clarifier according to claim 17, **characterized in that** it comprises the step of lowering said manifold to move said second tubular members away from said first tubular members in the direction of the bottom of said tank in order to render said clarifier plates accessible from the top of said tank.

23. Method according to any of claims 19 to 22 for cleaning a clarifier (1) according to claim 4, **characterized in that** it further comprises the step of placing said clarifier plates (Di) in a position substantially parallel to the vertical.

## Patentansprüche

1. Lamellenabsetzbecken (1) des Typs, umfassend:
a) einen Behälter (3) mit zu klärender Flüssigkeit (5),
b) Mittel (7), um diese Flüssigkeit (5) in eine untere Zone (9) des Behälters (3) einzuleiten,
c) Mittel (11), um die Flüssigkeit (5) aus einer oberen Zone (13) des Behälters (3) abzuleiten,
d) eine Vielzahl von Absetzplatten (Di), die im Inneren des Behälters (3) montiert sind, wobei diese Platten (Di) parallel sind und regelmäßig voneinander beabstandet sind, um eine Vielzahl von Durchgängen (ITi) zu definieren, die zwischen der unteren (9) und oberen Zone (13) verlaufen, und
e) Mittel zum Kalibrieren des Stroms der Flüssigkeit (5) zwischen diesen Durchgängen (ITi) und der oberen Zone (13), wobei diese Kalibrierungsmittel umfassen:
e1) erste röhrenförmige Organe (Ti), die im Inneren des Behälters (3) montiert sind, zu den Platten parallel sind und jedes an dem oberen Ende einer dieser Platten angebracht sind,
e2) zweite röhrenförmige Organe (Tj), die zu diesen ersten röhrenförmigen Organen (Ti) im Wesentlichen versetzt angeordnet sind, und
e3) Mittel, um die Entfernung der zweiten röhrenförmigen Organe (Tj) relativ zu den ersten röhrenförmigen Organen (Ti) zu verändern,
**dadurch gekennzeichnet, dass** die Absetzplatten (Di) mit den ersten röhrenförmigen Organen (Ti) fest verbunden montiert sind.

2. Absetzbecken (1) nach Anspruch 1, **dadurch gekennzeichnet, dass** die ersten röhrenförmigen Organe (Ti) und demnach die Absetzplatten (Di) beweglich im Behälter montiert sind.

3. Absetzbecken (1) nach Anspruch 2, **dadurch gekennzeichnet, dass** die ersten röhrenförmigen Organe (Ti) auf pendelnde Weise im Behälter montiert sind.

4. Absetzbecken (1) nach einem der Ansprüche 2 oder 3, **dadurch gekennzeichnet, dass** es Mittel (Δi, 17) umfasst, um die Neigung der Absetzplatten (Di) gemeinsam zu ändern.

5. Absetzbecken (1) nach Anspruch 4, **dadurch gekennzeichnet, dass** diese Neigungsänderungsmittel eine Betätigungsstange (17) umfassen, die durch eine Verbindung vom Typ Gleitzapfen mit den Absetzplatten (Di) verbunden ist.

6. Absetzbecken (1) nach Anspruch 1, **dadurch gekennzeichnet, dass** die ersten röhrenförmigen Organe (Ti) feststehend im Behälter montiert sind.

7. Absetzbecken (1) nach einem der vorherigen Ansprüche, **dadurch gekennzeichnet, dass** es Abstandshaltemittel (Cj) umfasst, die geeignet sind, einen vorbestimmten Abstand zwischen den ersten (Ti) und den zweiten (Tj) röhrenförmigen Organen zu halten.

8. Absetzbecken (1) nach Anspruch 7, **dadurch gekennzeichnet, dass** diese Abstandshaltemittel (Cj) Ringe umfassen, die auf den ersten (Ti) oder zweiten (Tj) röhrenförmigen Organen angesteckt sind.

9. Absetzbecken (1) nach Anspruch 8, **dadurch gekennzeichnet, dass** zwei Ringe (Cj) auf jedes der zweiten röhrenförmigen Organe (Tj) angesteckt sind.

10. Absetzbecken (1) nach einem der Ansprüche 8 oder 9, **dadurch gekennzeichnet, dass** die Ringe (Cj) aus einem Elastomermaterial geformt sind.

11. Absetzbecken (1) nach einem der Ansprüche 8 bis 10, **dadurch gekennzeichnet, dass** die Ringe (Cj) torisch sind.

12. Absetzbecken (1) nach einem der vorherigen Ansprüche, **dadurch gekennzeichnet, dass** die zweiten röhrenförmigen Organe (Tj) geeignet sind, um in der Flüssigkeit (5) unter den ersten röhrenförmigen Organen (Ti) zu schwimmen.

13. Absetzbecken (1) nach Anspruch 12, **dadurch gekennzeichnet, dass** es Betätigungsmittel umfasst, um die zweiten röhrenförmigen Organe (Tj) zum Boden des Behälters hinzudrücken.

14. Absetzbecken (1) nach einem der Ansprüche 12 oder 13, **dadurch gekennzeichnet, dass** die zweiten röhrenförmigen Organe (Tj) relativ zum Behälter (3) auf pendelnde Weise gelenkig verbunden sind.

15. Absetzbecken (1) nach einem der Ansprüche 1 bis 11, **dadurch gekennzeichnet, dass** die zweiten röhrenförmigen Organe (Tj) an Rampenmitteln (19) befestigt sind, die sich über den ersten röhrenförmigen Organen (Ti) erstrecken, wobei diese Rampenmittel (19) zwischen einer Betriebsposition, in der die zweiten röhrenförmigen Organe (Tj) gegen die ersten röhrenförmigen Organe (Ti) anliegen, und einer Reinigungsposition, in der die zweiten röhrenförmigen Organe (Tj) von den ersten röhrenförmigen Organen (Ti) beabstandet sind, beweglich sind.

16. Absetzbecken (1) nach Anspruch 15, **dadurch gekennzeichnet, dass** die zweiten röhrenförmigen Organe (Tj) über den ersten röhrenförmigen Organen (Ti) angeordnet sind.

17. Absetzbecken nach Anspruch 15, **dadurch gekennzeichnet, dass** die zweiten röhrenförmigen Organe unter den ersten röhrenförmigen Organen angeordnet sind.

18. Absetzbecken (1) nach einem der Ansprüche 15 bis 17, **dadurch gekennzeichnet, dass** es aufblasbare Membranmittel (21a, 21b) umfasst, um die Rampe (19) aus der Betriebsposition in die Reinigungsposition zu versetzen.

19. Reinigungsverfahren für ein Absetzbecken (1) nach Anspruch 12, **dadurch gekennzeichnet, dass** es den Schritt umfasst, der darin besteht, den Füllstand der Flüssigkeit (5) im Behälter (3) so zu senken, dass die zweiten röhrenförmigen Organe (Tj) in Richtung des Bodens des Behälters (3) von den ersten röhrenförmigen Organen (Ti) entfernt werden, um die Absetzplatten (Di) von der Oberseite des Behälters (3) aus zugänglich zu machen.

20. Reinigungsverfahren für ein Absetzbecken nach Anspruch 11, **dadurch gekennzeichnet, dass** es den Schritt umfasst, der darin besteht, die zweiten röhrenförmigen Organe mit den Betätigungsmitteln zum Boden des Behälters zu drücken, um die Absetzplatten von der Oberseite des Behälters aus zugänglich zu machen.

21. Reinigungsverfahren für ein Absetzbecken (1) nach Anspruch 16, **dadurch gekennzeichnet, dass** es den Schritt umfasst, der darin besteht, die Rampe (19) auf solche Weise anzuheben, dass die zweiten röhrenförmigen Organe (Tj) von den ersten röhrenförmigen Organen (Ti) in Richtung der Oberseite des Behälters (3) entfernt werden, um die Absetzplatten (Di) von der Oberseite des Behälters (3) aus zugänglich zu machen.

22. Reinigungsverfahren für ein Absetzbecken nach Anspruch 17, **dadurch gekennzeichnet, dass** es den Schritt umfasst, der darin besteht, die Rampe auf solche Weise abzusenken, dass die zweiten röhrenförmigen Organe von den ersten röhrenförmigen Organen in Richtung des Bodens des Behälters entfernt werden, um die Absetzplatten von der Oberseite des Behälters aus zugänglich zu machen.

23. Verfahren nach einem der Ansprüche 19 bis 22 für die Reinigung eines Absetzbeckens (1) nach Anspruch 4, **dadurch gekennzeichnet, dass** es außerdem den Schritt umfasst, der darin besteht, die Absetzplatten (Di) in eine Stellung anzuordnen, die im Wesentlichen parallel zur Vertikalen liegt.
